# EUROPEAN PATENT APPLICATION

(11) **EP 4 576 402 A1**
(43) Date of publication of application: **25.06.2025**
(21) Application number: 23889156.8
(22) Date of filing: 08.11.2023
(51) Int. Cl.: H01M 50/531, H01M 50/107, H01M 50/213, H01M 50/249

(54) **BATTERY CELL, BATTERY PACK, AND AUTOMOBILE COMPRISING SAME**

(30) Priority: 11.11.2022 KR 20220150570; 30.05.2023 KR 20230069484
(71) Applicant: LG Energy Solution, Ltd., Seoul 07335 (KR)
(72) Inventor: CHOI, Su-Ji, Daejeon 34122 (KR); KO, Kwang-Hun, Daejeon 34122 (KR); KIM, Do-Gyun, Daejeon 34122 (KR); YOUN, Young-Suk, Daejeon 34122 (KR); LEE, Da-Som, Daejeon 34122 (KR); HWANGBO, Kwang-Su, Daejeon 34122 (KR)
(74) Representative: Goddar, Heinz J.
(86) International application number: PCT/KR2023/017914
(87) International publication number: WO 2024/101898

(57) **Abstract**

A battery cell according to an embodiment of the present disclosure includes an electrode assembly in which a first electrode and a second electrode are wound around a winding axis while a separator is interposed therebetween, thereby defining a core and an outer circumferential surface, the first electrode including a first non-coated portion that is not coated with an active material layer along the winding direction; a battery housing having an opening provided on one side thereof and configured to accommodate the electrode assembly through the opening; and a collector including a support portion disposed on an upper portion of the electrode assembly, a tap coupling portion extending from the support portion and coupled to the first non-coated portion, and a housing coupling portion extending from the support portion to be electrically coupled to the inner surface of the battery housing and configured capable of being elongated in its length.

## Description

### TECHNICAL FIELD

The present disclosure relates to a battery cell, a battery pack, and a vehicle including the same.

The present application claims priority to Korean Patent Application No. 10-2022-0150570 filed on November 11, 2022 and Korean Patent Application No. 10-2023-0069484 filed on May 30, 2023 in the Republic of Korea, the disclosures of which are incorporated herein by reference.

### BACKGROUND ART

Secondary batteries, which are easy to apply depending on the product group and have electrical characteristics such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency in that they have the primary advantage of being able to dramatically reduce the use of fossil fuels and in that no by-product is generated due to energy use.

Types of current secondary batteries widely used include lithium ion batteries, lithium polymer batteries, nickel cadmium batteries, nickel hydrogen batteries, nickel zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage and/or charge/discharge capacity.

Meanwhile, in a collector that is configured to electrically connect an electrode assembly with a battery housing, a portion that is seated on the electrode assembly and a portion that is seated on a beading portion of the battery housing differ from each other in their heights, so that a connection portion connecting them must be configured to have a length greater than the connection distance on a plane or to be elongated.

To this end, in the past, the connection portion was applied with, for example, wrinkles formed thereon, but in this case, it is difficult to manufacture the collector only by processing a plate so as to remain flat, so a separate formation process is further required to be performed on the processed plate to change the shape three-dimensionally. Meanwhile, like the above case, if a structure that allows the connection portion to elongate is not applied to the collector, there is a problem in which the connection portion is damaged during elongation.

Therefore, a new structure of collector is needed to solve this problem.

### DISCLOSURE

### Technical Problem

The present disclosure has been designed to solve the problems of the related art, and therefore the present disclosure is directed to providing a collector capable of elongating without wrinkles or damage without the aid of a separate structure.

In another aspect, the present disclosure is intended to enable the manufacture of a collector only by processing the plate while maintaining the flat shape thereof.

However, the technical problems that the present disclosure seeks to solve are not limited to the above-mentioned problems, and other problems not mentioned above will be clearly understood by those skilled in the art from the description of the invention described below.

### Technical Solution

According to the present disclosure, there is provided a battery cell including: an electrode assembly in which a first electrode and a second electrode are wound around a winding axis while a separator is interposed therebetween, thereby defining a core and an outer circumferential surface, the first electrode including a first non-coated portion that is not coated with an active material layer along the winding direction; a battery housing having an opening provided on one side thereof and configured to accommodate the electrode assembly through the opening; and a collector including a support portion disposed on an upper portion of the electrode assembly, a tap coupling portion extending from the support portion and coupled to the first non-coated portion, and a housing coupling portion extending from the support portion to be electrically coupled to the inner surface of the battery housing and configured capable of being elongated in its length.

In one aspect of the present disclosure, the boundary between the support portion and the housing coupling portion may be bent such that an end of the housing coupling portion faces the opening and the inner surface of the battery housing.

In another aspect of the present disclosure, the housing coupling portion may extend in the winding axis direction of the electrode assembly and in the radial direction thereof.

In one aspect of the present disclosure, the housing coupling portion may include: a contact portion coupled to the inner surface of the battery housing; and a connection portion connecting the support portion and the contact portion.

In another aspect of the present disclosure, the housing coupling portion may be configured to be compressible in its length.

In another aspect of the present disclosure, at least a portion of the housing coupling portion may have a rim shape with an empty center.

For example, at least a portion of the housing coupling portion may have a planar shape of an oval.

In another embodiment of present disclosure, at least a portion of the housing coupling portion may have a planar shape of a polygon.

In another aspect of the present disclosure, the outer edge of the connection portion may have at least one indentation provided to be recessed to the inside of the connection portion.

In another aspect of the present disclosure, the connection portion may have at least one bent portion.

Preferably, the bent portion may have a convex shape in a direction toward the opening.

In another aspect of the present disclosure, the contact portion may have a continuous shape along the inner surface of the battery housing.

Meanwhile, the present disclosure provides a battery pack including at least one battery cell according to the embodiments described above.

Furthermore, the present disclosure provides a vehicle including at least one battery pack according to the embodiment described above.

### Advantageous Effects

According to the present disclosure, the collector can be effectively elongated.

More specifically, according to the present disclosure, even without a separate structure, no wrinkle or damage occurs when the collector is elongated.

In another aspect, according to the present disclosure, it is possible to manufacture a collector only by processing the plate while maintaining the flat shape thereof.

However, the effects obtainable according to the present disclosure are not limited to the above-mentioned effects, and other technical effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a diagram illustrating a battery cell according to an embodiment of the present disclosure.
FIG. 2 is a longitudinal cross-sectional and perspective view of FIG. 1.
FIG. 3 is a longitudinal cross-sectional view of the battery cell in FIG. 1.
FIG. 4 is a diagram illustrating a collector according to an embodiment of the present disclosure.
FIG. 5 is a diagram illustrating the state in which the collector in FIG. 4 is elongated.
FIG. 6 is a cross-sectional view of the collector taken along A shown in FIG. 4.
FIG. 7 is a diagram illustrating a housing coupling portion of a collector according to an embodiment of the present disclosure.
FIG. 8 is a diagram illustrating a process in which the housing coupling portion in FIG. 7 is elongated.
FIG. 9 is a diagram illustrating a collector according to another embodiment of the present disclosure.
FIG. 10 is a diagram illustrating a collector according to another embodiment of the present disclosure.
FIG. 11 is a diagram illustrating a collector according to another embodiment of the present disclosure.
FIG. 12 is a diagram illustrating a collector according to another embodiment of the present disclosure.
FIG. 13 is a diagram illustrating the state in which the collector in FIG. 12 is elongated.
FIG. 14 is a diagram illustrating a battery pack including a battery cell according to an embodiment of the present disclosure.
FIG. 15 is a diagram illustrating a vehicle including the battery pack in FIG. 14.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

Additionally, to aid understanding of the present disclosure, the accompanying drawings are not drawn to real scale and the dimensions of some elements may be exaggerated. In addition, the same reference numerals may indicate the same components between different embodiments.

Stating that two objects to be compared are the same means that they are "substantially the same." Therefore, "substantially the same" may include the case having a deviation that is considered low in the art, for example, a deviation of less than 5%. In addition, a parameter that is uniform in a certain area may indicate that it is uniform from the average perspective.

Although "first," "second," etc. are used to describe various elements, these elements are not limited to these terms. These terms are only used to distinguish one element from another element, and unless otherwise stated, a first element may also be a second element.

Throughout the specification, unless otherwise stated, respective elements may include a single or a plurality of elements.

Configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Additionally, the expression "an element is 'connected,' 'coupled,' or 'fastened' to another element" should be understood that the elements may be directly connected or fastened to each other, and that another element may be "interposed" between the elements or that the elements may be "connected," "coupled," or "fastened" through other elements.

Throughout the specification, "A and/or B", unless otherwise stated, may denote A or B or A and B, and "C to D", unless otherwise stated, may denote "equal to or greater than C and equal to or less than D."

For convenience of explanation, in this specification, the longitudinal direction of a winding axis of an electrode assembly 10 wound in a jellyroll shape will be referred to as an "axial direction (Y)". In addition, the direction surrounding the winding axis will be referred to as a "circumferential direction(X)." In addition, the direction approaching or moving away from the winding axis will be referred to as a "radial direction." Among these, the direction approaching the winding axis is called a "centripetal direction," and the direction moving away from the winding axis is called a "centrifugal direction."

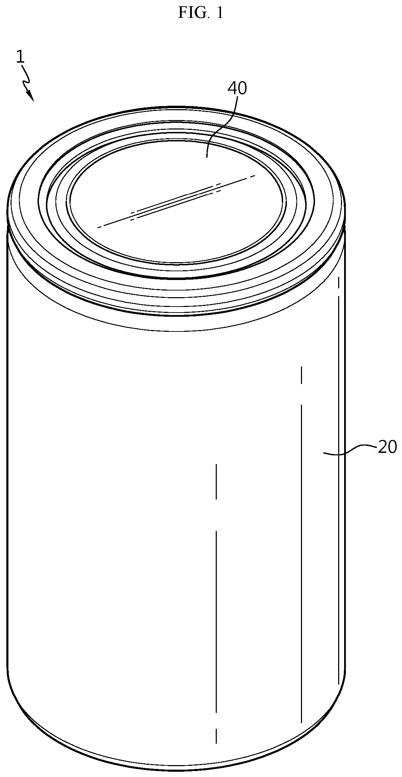

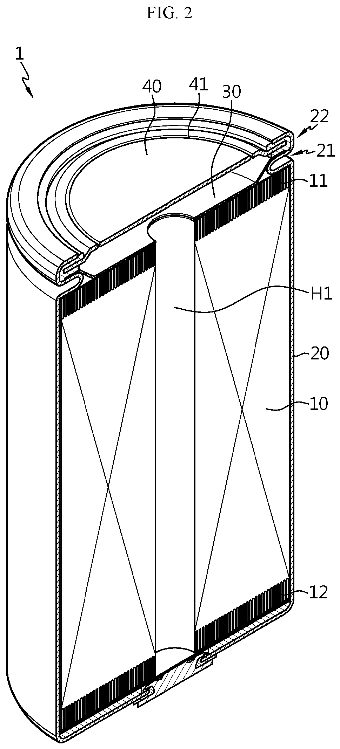

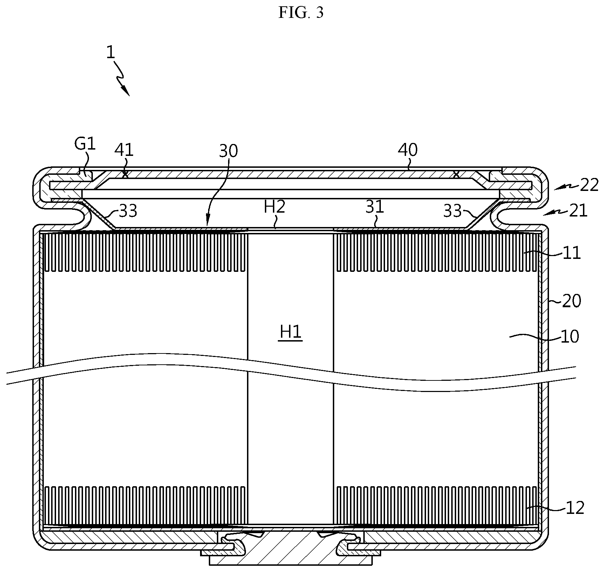

FIG. 1 is a diagram illustrating a battery cell 1 according to an embodiment of the present disclosure, and FIG. 2 is a longitudinal cross-sectional and perspective view in FIG. 1. FIG. 3 is a longitudinal cross-sectional view of the battery cell 1 in FIG. 1.

Referring to FIG. 1, the battery cell 1 according to an embodiment of the present disclosure includes an electrode assembly 10, a battery housing 20, a collector 30. The battery cell 1 may further include a housing cover 40. The present disclosure is not limited to a specific type of battery, and may be applied to other types of batteries, such as a prismatic battery.

The electrode assembly 10 includes a first non-coated portion 11 and a second non-coated portion 12. More specifically, the electrode assembly 10 has a structure in which a first electrode and a second electrode are wound around a winding axis while a separator is interposed therebetween, thereby defining a core and an outer circumferential surface. That is, the electrode assembly 10 applied to the present disclosure may be a jellyroll-type electrode assembly 10. In this case, an additional separator may be provided on the outer circumferential surface of the electrode assembly 10 to insulate the same from the battery housing 20. The electrode assembly 10 may have a winding structure well known in the art without limitations.

The first electrode includes a first electrode collector and a first electrode active material coated on one or both sides of the first electrode collector. A non-coated portion that is not coated with the first electrode active material is provided at one end of the first electrode in the width direction (a direction parallel to the height direction of the battery cell 1 shown in FIG. 1) thereof. That is, the first electrode includes a non-coated portion that is not coated with an active material at the end of the long side thereof along the winding direction and exposed to the outside of the separator. Hereinafter, the non-coated portion functioning as a first electrode tab will be referred to as a first non-coated portion 11. The first non-coated portion 11 is provided on the upper portion of the electrode assembly 10 accommodated in the battery housing 20 in the height direction (a direction parallel to the height direction of the battery cell 1 shown in FIG. 1) thereof. That is, the first electrode includes a first non-coated portion 11 that is not coated with an active material at the end of the long side and exposed to the outside of the separator, and at least a portion of the first non-coated portion 11 itself is used as an electrode tab. The first non-coated portion 11 may be, for example, a negative electrode tab.

Meanwhile, at least a portion of the first non-coated portion 11 may include a plurality of segments divided along the winding direction of the electrode assembly 10. In this case, the plurality of segments may be bent in the radial direction of the electrode assembly 10.

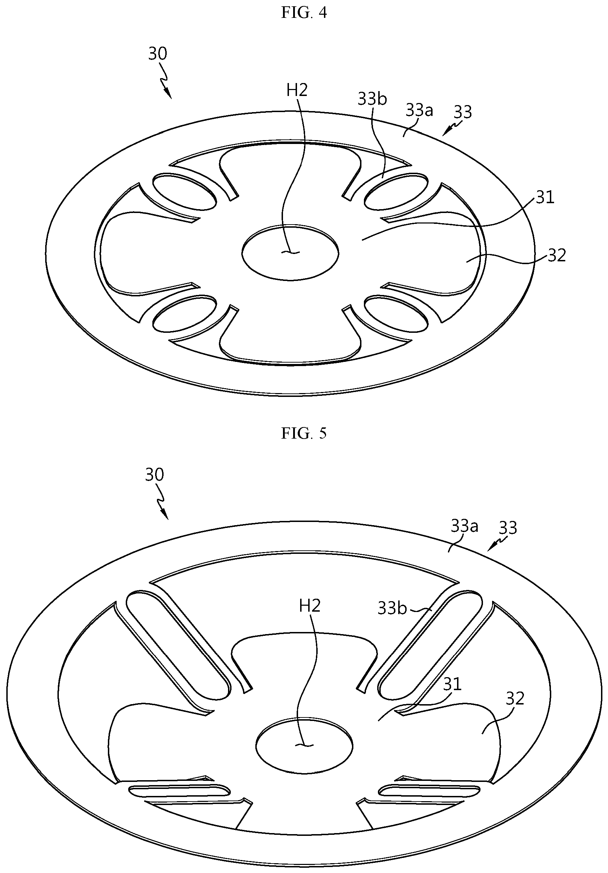

Referring to FIGS. 2 and 3, the plurality of bent segments of the first non-coated portion 11 may overlap in multiple layers to form a bent surface. In this case, a tap coupling portion 32 of the collector 30, which will be described later, may be coupled onto the bent surface. The tap coupling portion 32 may be coupled to the area where the plurality of segments overlaps in multiple layers. In this case, the tap coupling portion 32 may be seated on the bent surface of the first non-coated portion 11 and then welding may be performed on a certain area thereof. That is, the tap coupling portion 32 may be coupled to the area where the plurality of segments of the first non-coated portion 11 overlaps in multiple layers. For example, as shown in FIG. 5, the tap coupling portion 32 may have at least one welded portion that is welded to a certain area while seated on the bent surface of the first non-coated portion 11.

The second electrode includes a second electrode collector and a second electrode active material coated on one or both sides of the second electrode collector. A non-coated portion that is not coated with the second electrode active material is provided at the other end of the second electrode in the width direction (a direction parallel to the height direction of the battery cell 1 shown in FIG. 1) thereof. That is, the second electrode includes a non-coated portion that is not coated with an active material at the end of the long side along the winding direction and exposed to the outside of the separator. Hereinafter, the non-coated portion functioning as a second electrode tab will be referred to as a second non-coated portion 12. The second non-coated portion 12 is provided at the bottom of the electrode assembly 10 accommodated in the battery housing 20 in the height direction thereof. That is, the second electrode includes a second non-coated portion 12 that is not coated with an active material at the end of the long side and exposed to the outside of the separator, and at least a portion of the second non-coated portion 12 itself is used as an electrode tab. The second non-coated portion 12 may be, for example, a positive electrode tab.

Meanwhile, in the present disclosure, any active material known in the art may be used, without limitations, as the positive electrode active material coated on the positive electrode plate and the negative electrode active material coated on the negative electrode plate.

Referring to FIG. 1, the battery housing 20 is a substantially cylindrical container having an opening formed on one side thereof, and is made of a conductive metal material. In general, the side face of the battery housing 20 and the bottom face opposite the opening are integrally formed. That is, the battery housing 20 is generally configured such that the top in the height direction is open and the bottom is closed. The bottom face of the battery housing 20 may be configured in a substantially flat shape. The battery housing 20 receives the electrode assembly 10 through the opening formed on one side in the height direction. The battery housing 20 may also receive an electrolyte through the opening.

The battery housing 20 may have a beading portion 21 formed at an end adjacent to the opening provided at the top of the battery housing 20. The battery housing 20 may further include a crimping portion 22 formed on the beading portion 21. The beading portion 21 may be configured such that the outer circumferential surface of the battery housing 20 is press-fitted to a predetermined depth. More specifically, the beading portion 21 may be configured to be press-fitted inward in the area between the opening formed on one side of the battery housing 20 and an accommodation portion that accommodates the electrode assembly 10.

The beading portion 21 is formed above the electrode assembly 10. The inner diameter of the battery housing 20 in the area where the beading portion 21 is formed is smaller than the diameter of the electrode assembly 10. At least one tap coupling portion 32 of the collector 30, which will be described later, may be located lower than the beading portion 21.

The beading portion 21 provides a support surface on which the housing cover 40 is seated. In addition, the beading portion 21 may provide a support surface on which at least a portion of the edge of the collector 30, which will be described later, is seated and coupled. That is, at least a portion of the edge of the collector 30 of the present disclosure and/or the edge of the housing cover 40 may be seated on the upper surface of the beading portion 21. In order to stably support at least a portion of the edge of the collector 30 and/or the edge of the housing cover 40, the upper surface of the beading portion 21 may be configured to extend in a direction approximately parallel to the bottom face of the battery housing 20, that is, in a direction approximately perpendicular to the side wall of the battery housing 20.

The beading portion 21 may prevent the electrode assembly 10, which may have a size approximately corresponding to the inner diameter of the battery housing 20, from coming out through the opening formed at the top of the battery housing 20 and serve as a support portion on which the housing cover 40 is seated. The upper beading portion 21 may function as a support portion for fixing a contact portion 33a of the collector 30 and a sealing gasket G1, as well as the housing cover 40.

The crimping portion 22 is formed on the top of the beading portion 21. The crimping portion 22 is configured to extend and bend to surround the edge of the housing cover 40 disposed above the beading portion 21. Such a configuration of the crimping portion 22 may fix the housing cover 40 onto the beading portion 21.

First, referring to FIGS. 1 and 2, the collector 30 according to an embodiment of the present disclosure is accommodated inside the battery housing 20 and is electrically connected to the electrode assembly 10 and the battery housing 20. That is, the collector 30 electrically connects the electrode assembly 10 and the battery housing 20.

FIG. 4 is a diagram illustrating a collector 30 according to an embodiment of the present disclosure.

Referring to FIG. 4, the collector 30 includes a support portion 31 located on one surface of the electrode assembly 10, a tap coupling portion 32 extending from the support portion 31 and coupled to the first non-coated portion 11, and a housing coupling portion 33 extending from the support portion 31 and coupled to the inner surface of the battery housing 20.

The tap coupling portion 32 and the housing coupling portion 33 are indirectly connected through the support portion 31, instead of being directly connected to each other. Therefore, when an external impact is applied to the battery cell 1 of the present disclosure, it is possible to minimize the possibility of damage to the coupling portion between the collector 30 and the electrode assembly 10 and the coupling portion between the collector 30 and the battery housing 20.

Referring to FIG. 4, at least one tap coupling portion 32 and/or at least one housing coupling portion 33 may be provided. At least one tap coupling portion 32 and at least one housing coupling portion 33 may be disposed, for example, approximately in a radial shape, a cross shape, or a combination thereof, with respect to the center of the collector 30. In another aspect, the respective housing coupling portions 33 may be disposed between adjacent tap coupling portions 32.

Referring to FIG. 3, the support portion 31 and the plurality of tap coupling portions 32 are disposed at the top of the electrode assembly 10. The tap coupling portion 32 is coupled to the first non-coated portion 11 of the electrode assembly 10. The tap coupling portion 32 may be coupled to the first non-coated portion 11 in the radial direction of the electrode assembly 10 by, for example, welding. For example, the tap coupling portion 32 may be welded to the first non-coated portion 11 to be substantially parallel to the bottom face of the battery housing 20. The welded portion formed between the first non-coated portion 11 and the tap coupling portion 32 may form a straight welding pattern approximately extending, for example, in the radial direction of the electrode assembly 10.

Meanwhile, the support portion 31, as well as the tap coupling portion 32, may also be coupled to the first non-coated portion 11. The tap coupling portion 32 and the first non-coated portion 11 may be coupled by welding. The support portion 31 and the tap coupling portion 32 are located lower than the beading portion 21 in the case where the beading portion 21 is formed in the battery housing 20.

The support portion 31 may include a collector hole H2 formed at a position corresponding to a winding hole H1 formed at approximately the center of the electrode assembly 10. The winding hole H1 and the collector hole H2, which communicate with each other, may serve as a passage for insertion of a welding rod or radiation of a laser beam for welding between a terminal 50 and a second collector 30 or for welding between the terminal and a lead tab (not shown). The collector hole H2 has a diameter substantially equal to or greater than that of the winding hole H1 of the electrode assembly 10 so as not to cover the winding hole H1 formed in the core of the electrode assembly 10. If the diameter of the hole collector H2 is excessively smaller than the diameter of the winding hole H1, the winding hole H1 may be obscured, lowering the liquid injection performance and making it difficult to secure sufficient space for insertion of a welding device or radiation of a laser beam.

A plurality of tap coupling portions 32 may extend approximately radially from the support portion 31 of the collector 30 toward the side wall of the battery housing 20. The respective tap coupling portions 32 may be positioned to be spaced apart from each other along the circumference of the support portion 31.

A plurality of housing coupling portions 33 may extend approximately radially from the support portion 31 of the collector 30 toward the side wall of the battery housing 20. The respective housing coupling portions 33 may be positioned to be spaced apart from each other along the circumference of the support portion 31. At least one housing coupling portion 33 may be located between adjacent tap coupling portions 32.

The housing coupling portion 33 may extend from the support portion 31 to be electrically coupled to the inner surface of the battery housing 20. For example, the housing coupling portion 33 may be coupled to, for example, the beading portion 21 on the inner surface of the battery housing 20. In particular, the housing coupling portion 33 may be coupled to the upper surface of the beading portion 21.

In one aspect of the present disclosure, the housing coupling portion 33 may be configured capable of being elongated in its length. This will be described in detail below with reference to FIGS. 4 and 5.

FIG. 4 is a diagram illustrating a collector 30 according to an embodiment of the present disclosure, and FIG. 5 is a diagram illustrating the state in which the collector 30 in FIG. 4 is elongated.

Referring to FIGS. 4 and 5, the housing coupling portion 33 may be configured so as to be elongated in length. That is, the housing coupling portion 33 may be configured such that the length of the housing coupling portion 33 when the housing coupling portion 33 is elongated is greater than the length thereof when the housing coupling portion 33 is not elongated. For example, FIG. 4 shows a collector 30 before it is elongated. The collector 30 in FIG. 4 may be made of a plate in a flat shape. That is, when manufacturing the collector 30, a flat plate may be cut and processed to manufacture the collector 30 shown in FIG. 4. Such a collector 30 may be elongated, as shown in FIG. 5, before or while being assembled into the battery cell.

That is, according to the present disclosure, the collector 30 configured as a single flat plate may be easily elongated without a separate structure. More specifically, according to this structure, no wrinkle or damage occurs when elongating the collector 30 even without a separate structure. **In** other words, the collector 30 configured as a single plate may be elongated without wrinkles or damage. **In** addition, according to the present disclosure, even if the collector 30 is manufactured only in the form of a flat plate without additional processes, it is possible to prevent wrinkles or damage from occurring when the collector 30 is elongated. **In** particular, it is possible to reduce a risk of the connection portion 33b becoming vulnerable depending on the direction of formation of wrinkles in the case where separate wrinkles are formed in the connection portion 33b for elongation of the connection portion 33b of the conventional collector 30. In addition, there is no wrinkle or separate structure in the collector 30, thereby facilitating the flow of current. Furthermore, according to the present disclosure, it is possible to lower the production cost in the production process of the collector 30 and simplify the production process. In particular, according to the present disclosure, the separate wrinkles provided in the conventional connection portion 33b for elongation of the connection portion 33b may be omitted.

In another aspect of the present disclosure, the boundary between the support portion 31 and the housing coupling portion 33 may be configured to be bent such that the end of the housing coupling portion 33 faces the opening and the inner surface of the battery housing 20.

For example, referring to FIGS. 3 and 5, the housing coupling portion 33 is bent in a direction toward the top of the battery cell. That is, the collector 30, which was manufactured as a flat plate, may be bent and deformed in some portions thereof and then assembled inside the battery cell. In particular, the boundary between the support portion 31 and the housing coupling portion 33 may be bent, and in this case, it may be bent such that the end of the housing coupling portion 33 faces the opening.

Preferably, the housing coupling portion 33 may be configured to extend in the winding axis direction and radial direction of the electrode assembly 10.

Referring to FIGS. 2 and 3, the housing coupling portion 33 may extend upwards from the winding axis of the electrode assembly 10 to be inclined. As a result, in order for the collector 30 to switch from the flat plate state when initially manufactured to a state in which the housing coupling portion 33 extends upwards as shown in FIG. 5, the support portion 31 and the housing coupling portion 33 must be bent upwards at the boundary therebetween, and, as a result, the collector 30 may be shaped to have a predetermined height in the vertical direction. That is, the collector 30 has a predetermined overall height, and in this case, the overall height may be configured to vary within a predetermined range.

Referring to FIGS. 3 to 5, the housing coupling portion 33 includes a contact portion 33a coupled to the inner surface of the battery housing 20, and a connection portion 33b connecting the support portion 31 and the contact portion 33a.

The contact portion 33a is coupled to the inner surface of the battery housing 20. In the case where the beading portion 21 is formed in the battery housing 20, the contact portion 33a may be coupled onto the beading portion 21. In this case, for stable contact and coupling, both the beading portion 21 and the contact portion 33a may be configured to extend in a direction approximately parallel to the bottom face of the battery housing 20, that is, in a direction approximately perpendicular to the side wall of the battery housing 20.

Meanwhile, the contact portion 33a may be welded to the upper surface of the beading portion 21. That is, the welded portion may be formed on the upper surface area of the beading portion 21. The welded portion formed between the contact portion 33a and the beading portion 21 may be formed to be narrower than the upper surface of the beading portion 21. For example, laser welding, ultrasonic welding, or spot welding may be applied as welding between the battery housing 20 and the collector 30.

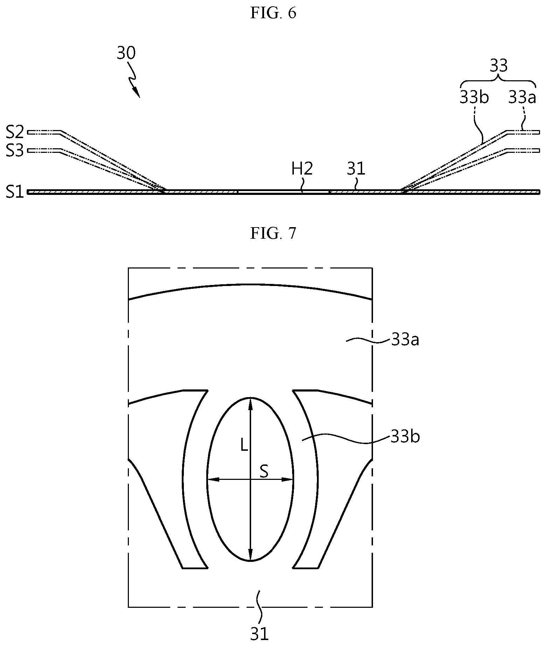

FIG. 6 is a cross-sectional view of the collector 30 taken along A shown in FIG. 4.

Referring to FIG. 6, the housing coupling portion 33 may be configured to be compressible in its length.

The collector 30 is manufactured by cutting and processing a flat plate as described above. That is, when initially manufactured, the collector 30 is in a flat plate state. This state will be defined as a first state S1. For example, the collector 30 according to an embodiment of the present disclosure may have an overall height (the distance between the upper surface of the contact portion 33a and the upper surface of the support portion 31 in the extension direction of the winding axis or the distance between the upper surface of the contact portion 33a and the upper surface of the tap coupling portion 32 in the extension direction of the winding axis) of 0 mm in the first state S1. Meanwhile, as will be described in detail later, the housing coupling portion 33 may have a rim shape with an empty center. For example, the housing coupling portion 33 may have an oval shape with a major axis L and a minor axis S. As an example, the major axis L of the oval may be about 10 mm and the minor axis S thereof may be about 6 mm in the first state S1.

Meanwhile, in order for the collector 30 to function as a component, a certain area of the collector 30 must be in a bent state. For example, as described above, since the collector 30 electrically connects the electrode assembly 10 and the battery housing 20, if there is a difference in height between the coupling surface of the battery housing 20 and the collector 30 and the coupling surface of the electrode assembly 10 and the collector 30, the collector 30 must be shaped to conform to the height difference. Specifically, referring to FIGS. 3 and 5, the boundary between the support portion 31 and the housing coupling portion 33 of the collector 30 must be in an upwardly bent state. Such a state in which the collector 30 is deformed to be bent and is not yet assembled into the battery cell will be defined as a second state S2. The collector 30 in the second state S2 may be finally received inside the battery housing 20 to be assembled into the battery cell. At this time, the overall height of the collector 30 may be configured to be greater than or equal to the axial distance (the distance along the extension direction of the winding axis of the electrode assembly 10) between the upper surface of the electrode assembly 10 and the upper surface of the beading portion 21. If the overall height of the collector 30 is less than the axial distance between the upper surface of the electrode assembly 10 and the upper surface of the beading portion 21, the contact portion 33a of the collector 30 may interfere with the beading portion 21, so that the support portion 31 and/or the tap coupling portion 32 may not come into contact with the electrode assembly 10. Alternatively, if the collector 30 is preferentially coupled to the electrode assembly 10 and then received inside the battery housing 20, the contact portion 33a may interfere with the beading portion 21, so that the electrode assembly 10 may fail to reach the bottom of the battery housing 20. As a result, this may produce an empty space, thereby lowering energy efficiency. For example, the overall height of the collector 30, that is, the height in the winding axis direction between the support portion 31 and the contact portion 33a, may be set to about 5 mm in the second state S2, and in this case, the connection portion 33b may be required to have a structural elongation length of about 1.18 mm.

Meanwhile, as described above, the overall height of the collector 30 is preferably configured to be greater than or equal to the axial distance between the upper surface of the electrode assembly 10 and the upper surface of the beading portion 21. According to this structure, the contact portion 33a of the collector 30 is located higher than the beading portion 21. Here, the connection portion 33b may be compressed such that the contact portion 33a comes into contact with the beading portion 21. At this time, welding may be performed in the state where the contact portion 33a is in contact with the beading portion 21. Such a state in which the contact portion 33a is in contact with the beading portion 21 will be defined as a third state S3. For example, the overall height of the collector 30 may be set to about 3.38 mm in the third state S3, and in this case, the connection portion 33b may be compressed to a predetermined length. That is, the connection portion 33b, which was elongated to an overall height of about 5 mm, may be compressed back to 3.38 mm.

That is, according to the present disclosure, the housing coupling portion 33 may be configured to be elongated and/or compressed in its length. Specifically, the housing coupling portion 33 may be elongated in its length when switching from the first state S1 to the second state S2. In addition, the housing coupling portion 33 may be compressed in its length when switching from the second state S2 to the third state S3. According to the structure in which the housing coupling portion 33 is configured to be elongated and compressed in its length, a single design of collector 30 may be applied to several battery cells with various sizes and specifications.

Additionally, according to the present disclosure, the collector 30 configured as a single flat plate may be easily elongated and/or compressed without a separate structure. In addition, according to this structure, no wrinkle or damage occurs when elongating and/or compressing the collector 30 even without a separate structure. In other words, according to the present disclosure, even if the collector 30 is manufactured only in the form of a flat plate without further processes, it is possible to prevent the occurrence of wrinkles or damage when the collector 30 is elongated and/or compressed.

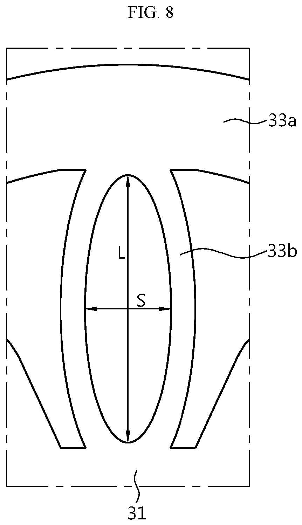

FIG. 7 is a diagram illustrating a housing coupling portion 33 of a collector 30 according to an embodiment of the present disclosure, and FIG. 8 is a diagram illustrating a process in which the housing coupling portion 33 in FIG. 7 is elongated.

According to one aspect of the present disclosure, at least a portion of the housing coupling portion 33 may be configured to have a rim shape with an empty center. In particular, the connection portion 33b of the housing coupling portion 33 may be configured to have a rim shape with an empty center.

Here, the rim shape includes a circular shape, but is not necessarily limited to the circular shape. For example, the rim shape meant in the present disclosure may be a polygonal structure such as a triangle or a square, or may indicate a specific shape with a curved edge. That is, the rim shape in the present disclosure includes all shapes with an empty center and a continuous edge.

For example, in an embodiment of the present disclosure, at least a portion of the housing coupling portion 33 may be configured to have an oval shape on a plan view as shown in FIGS. 7 and 8. Here, the oval includes a circle. In particular, the connection portion 33b of the housing coupling portion 33 may have a planar shape of an oval. Both the connection portion 33b before elongating and the connection portion 33b after elongating may have an oval shape. For example, as shown in FIG. 7, the connection portion 33b before elongation may be configured to have an approximately oval shape. Meanwhile, when the collector 30 is elongated as shown in FIG. 8, the connection portion 33b may be transformed into another oval shape with a longer major axis L and a shorter minor axis S.

As described above, according to the structure in which at least a portion of the housing coupling portion 33 has a shape with an empty center and a continuous edge, it is possible to prevent the occurrence of wrinkles and/or damage even when the housing coupling portion 33 having a flat plate shape is elongated and/or compressed. In other words, according to the present disclosure, the durability of the collector 30 may be improved even with a simple manufacturing process.

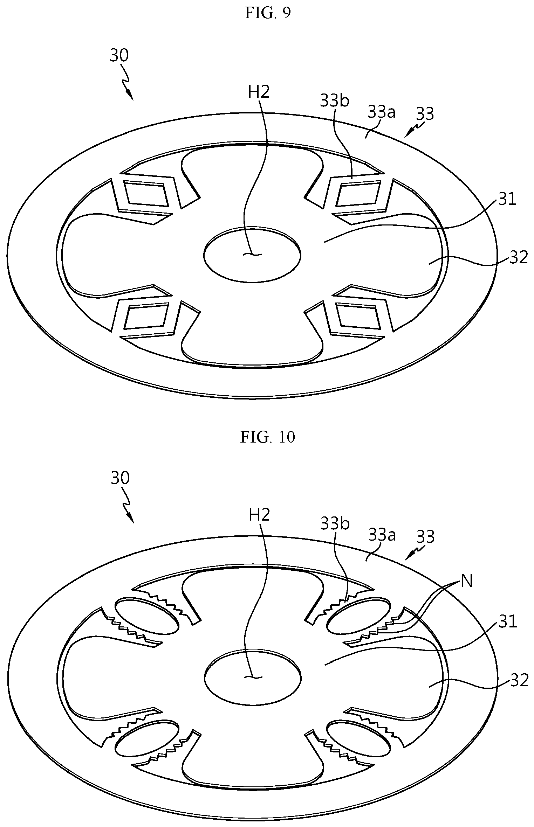

FIG. 9 is a diagram illustrating a collector 30 according to another embodiment of the present disclosure.

Since the collector 30 shown in FIG. 9 is similar to the collector 30 in the previous embodiment, redundant descriptions of the elements that are substantially the same as or similar to those in the previous embodiment will be omitted, and the following description will be made based on the differences from the previous embodiment.

As another embodiment of the present disclosure, at least a portion of the housing coupling portion 33 may be configured to have a planar shape of a polygon. **In** particular, the connection portion 33b may be configured to have a planar shape of a polygon.

For example, referring to FIG. 9, the connection portion 33b may have a planar shape of a rhombus. However, the shape of the connection portion 33b of the present disclosure is not limited to the rhombus shape, and may include all polygonal shapes such as triangles, squares, and pentagons. That is, the connection portion 33b of the present disclosure may include all shapes having a polygonal shape with an empty center and continuous edges.

FIG. 10 is a diagram illustrating a collector 30 according to another embodiment of the present disclosure.

Since the collector 30 shown in FIG. 10 is similar to the collector 30 in the previous embodiment, redundant descriptions of the elements that are substantially the same as or similar to those in the previous embodiment will be omitted, and the following description will be made based on the differences from the previous embodiment.

As another embodiment of the present disclosure, the outer edge of the connection portion 33b may have at least one indentation N formed to be recessed to the inside of the connection portion 33b.

Referring to FIG. 10, the connection portion 33b may be configured to have an approximately oval shape, and a plurality of indentations N may be provided on the outer edge of the oval. In order for the connection portion 33b having an oval shape to elongate in the direction of the major axis L, the length of the outer edge of the connection portion 33b must decrease while the length of the inner edge increases. In this regard, the collector 30 may be made of metal to ensure electrical conductivity, but the metal with high strength may not be easy to be deformed in its shape.

However, according to the present disclosure, since the connection portion 33b has indentations N recessed to the inside of the connection portion 33b on the outer edge thereof, when elongating the connection portion 33b, the areas between the indentations N may become close to each other. Accordingly, the circumferential length of the outer edge of the connection portion 33b may be easily reduced.

According to the embodiments in FIGS. 4 to 10, the connection portion 33b may be easily elongated when assembling the collector 30 to the battery cell 1. That is, the collector 30 made of a single plate may be elongated without wrinkles or damage without the aid of a separate structure. Specifically, referring to FIG. 3, the support portion 31 of the collector 30 is in the state of being spaced a predetermined distance apart from the contact portion 33a of the housing coupling portion 33 of the collector 30 in the direction of the central axis of the battery cell 1. To this end, the collector 30 in a flat shape shown in FIG. 4 must be deformed while elongating in the vertical direction. For example, the boundary between the support portion 31 and the connection portion 33b and the boundary between the connection portion 33b and the contact portion 33a may be bent, respectively. At this time, in order to maintain the constant radial length from the center of the collector 30 to the end of the housing coupling portion 33, the length of the connection portion 33b must be increased. Therefore, when the housing coupling portion 33 is bent as shown in FIG. 5, the shape of the connection portion 33b is deformed so that the housing coupling portion 33 may be easily elongated along its extension direction. At the same time, the occurrence of wrinkles and/or damage may be suppressed during the elongation process.

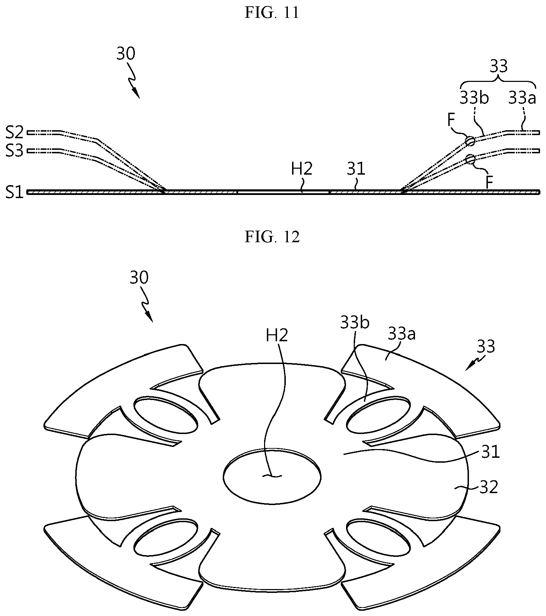

FIG. 11 is a diagram illustrating a collector 30 according to another embodiment of the present disclosure.

In one aspect of the present disclosure, the connection portion 33b may include at least one bent portion F. Preferably, the bent portion F may have a convex shape in a direction toward the opening.

Referring to FIG. 11, the bent portion F may be located above an imaginary plane that passes through the center of an imaginary straight line connecting one end of the contact portion 33a and one end of the tap coupling portion 32 and is parallel to the floor of the battery housing 20. The at least one bent portion F may be bent at an obtuse angle such that the collectors 30 do not overlap each other when viewed in the longitudinal axis of the battery housing 20. As another embodiment, the connection portion 33b may include a plurality of bent portions F. In this case, the boundary between the contact portion 33a and the connection portion 33b may be bent at an obtuse angle. That is, the inclination of the connection portion 33b may gradually decrease as the connection portion 33b becomes closer to the beading portion 21.

According to the structure in which the housing coupling portion 33 of the present disclosure has the bent portion F as described above, variability in the overall height of the collector 30 may be further improved. In other words, the bent portion F may further increase the capacity for the collector 30 to be elongated or compressed in the vertical direction. In addition, the stress applied to the collector 30 may be effectively dispersed in the subsequent battery sizing process.

In another aspect of the present disclosure, the contact portion 33a may be configured to have a continuous shape along the inner surface of the battery housing 20.

In order to maximize the contact area, the collector 30 may be configured such that the sum of the circumferential extension lengths of the respective contact portions 33a of the plurality of housing coupling portions 33 is substantially equal to or slightly less than the inner circumference of the battery housing 20. In particular, as shown in FIGS. 4 and 5, the contact portion 33a may be configured to have a continuous shape along the inner surface of the battery housing 20. That is, the contact portion 33a may have a ring shape extending along the inner surface of the battery housing 20. However, in the case where the contact portion 33a is configured as a ring type described above, when deforming the collector 30 in the longitudinal direction of the battery cell, the connection portion 33b must be elongated in the longitudinal direction so as to maintain the shape of the contact portion 33a. Therefore, at least a portion of the housing coupling portion 33 may be configured capable of being elongated as described in the present disclosure, thereby maintaining the constant shape of the contact portion 33a.

Furthermore, according to the structure in which the contact portion 33a is configured to have a continuous shape along the inner surface of the battery housing 20, the contact area between the collector 30 and the battery housing 20 may be maximized. Accordingly, the bonding force between the collector 30 and the battery housing 20 may be increased. Additionally, internal resistance of the battery may be reduced.

On the other hand, since the contact portion 33a is interposed between the beading portion 21 and the sealing gasket G1, according to the above structure, it is possible to maintain the constant distance between the beading portion 21 and the sealing gasket G1. Accordingly, it is possible to secure an overall uniform compression rate of the sealing gasket G1 during the crimping process. Therefore, a risk of electrolyte leakage after the crimping process may be reduced.

For example, as shown in FIG. 3, the sealing gasket G1 may be placed on the beading portion 21 and the contact portion 33a, and then the contact portion 33a, the beading portion 21, and the sealing gasket G1 may be compressed by the crimping portion 22. In this case, if the contact portion 33a is configured to have a predetermined width while extending in both directions from the end of the connection portion 33b, instead of having a continuous shape along the inner surface of the battery housing 20, the beading portion 33b 21 may have an area in contact with the contact portion 33a and an area not in contact with the contact portion 33a. That is, there are an area where the contact portion 33a is interposed between the beading portion 21 and the sealing gasket G1, and an area where the contact portion 33a is not interposed between the beading portion 21 and the sealing gasket G1. Meanwhile, the crimping portion 22 is formed by the same compressing force along the circumferential direction without variation, so the elements provided inside the crimping portion 22 receive a constant force. Accordingly, the compression ratio of the sealing gasket G1 in the area where the contact portion 33a is interposed between the beading portion 21 and the sealing gasket G1 becomes greater than the compression ratio of the sealing gasket G1 in the area where the contact portion 33a is not interposed between the beading portion 21 and the sealing gasket G1. As a result, the compression ratio of the sealing gasket G1 alternately repeats increases and decreases along the circumferential direction. Accordingly, the sealing properties of the sealing gasket G1 may deteriorate to increase a risk of leakage of electrolyte and the like.

On the other hand, according to the present disclosure, since the contact portion 33a is configured to have a continuous shape along the inner surface of the battery housing 20, the contact portion 33a is always interposed between the beading portion 21 and the sealing gasket G1. As a result, the compression rate of the sealing gasket G1 may remain constant in the circumferential direction. Accordingly, the sealing properties of the sealing gasket G1 may be strengthened, and the risk of leakage of electrolyte and the like may be effectively reduced.

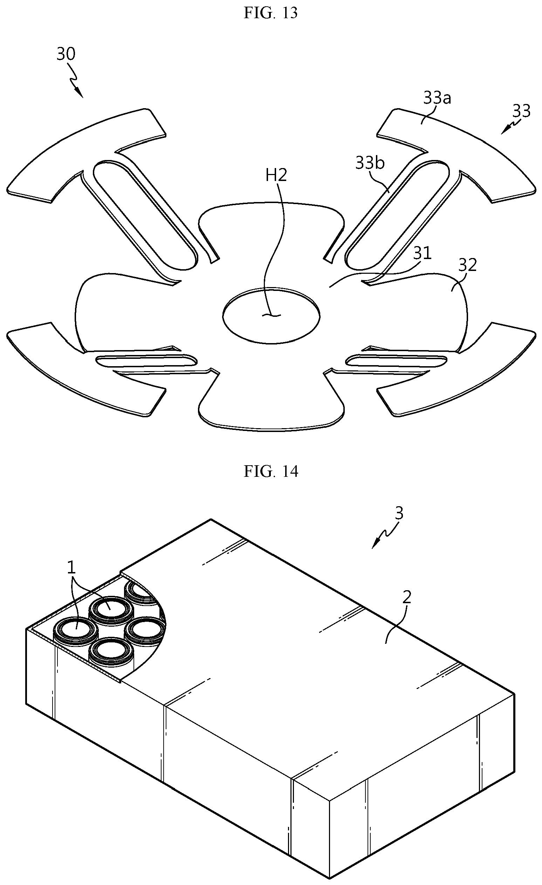

FIG. 12 is a diagram illustrating a collector 30 according to another embodiment of the present disclosure, and FIG. 13 is a diagram illustrating the state in which the collector 30 in FIG. 12 is elongated.

Referring to FIGS. 12 and 13, as another embodiment of the present disclosure, at least a portion of the contact portion 33a may be formed in an arc shape extending in the circumferential direction along the beading portion 21 of the battery housing 20. Accordingly, the circumferential extension length of the contact portion 33a may be formed to be greater than the width of the connection portion 33b. For example, the contact portion 33a may have arcs extending from the intersection of the connection portion 33b and the contact portion 33a in opposite directions on the beading portion 21 along the circumferential direction thereof.

Referring to FIGS. 1 to 3, the housing cover 40 may have a venting portion 41 formed to prevent an increase in internal pressure due to gas generated inside the battery housing 20. The venting portion 41 may be configured to break if the internal pressure of the battery housing 20 increases to a predetermined level or more. For example, the venting portion 41 may be formed in a portion of the housing cover 40, and may be a more vulnerable area in structure than the surrounding area so as to be easily broken when internal pressure is applied. For example, the venting portion 41 may be an area having a smaller thickness than the surrounding area. Referring to FIGS. 1 and 2, the venting portion 41 may form an approximately circular closed loop.

Referring to FIGS. 1 to 3, the housing cover 40 covers the opening formed on one side of the battery housing 20. The housing cover 40 may be fixed by the crimping portion 22 formed on the top of the battery housing 20. In this case, a sealing gasket G1 may be interposed between the battery housing 20 and the housing cover 40 and between the collector 30 and the housing cover 40 to improve the fixing force and the airtightness of the battery housing 20. In this case, the contact portion 33a may be interposed between the beading portion 21 of the battery housing 20 and the sealing gasket G1. The contact portion 33a interposed between the beading portion 21 and the sealing gasket G1 as described above may be fixed by bending the crimping portion 22 extending upwards from the beading portion 21.

FIG. 14 is a diagram illustrating a battery pack 3 including a battery cell 1 according to an embodiment of the present disclosure.

Referring to FIG. 14, a battery pack 3 3 according to an embodiment of the present disclosure includes a battery assembly in which a plurality of battery cells 1 according to an embodiment of the present disclosure is electrically connected as described above, and a pack housing 2 accommodating the same. For convenience of illustration, the components such as a bus bar for electrical connection, a cooling unit, and power terminals are omitted from the drawings of the present disclosure.

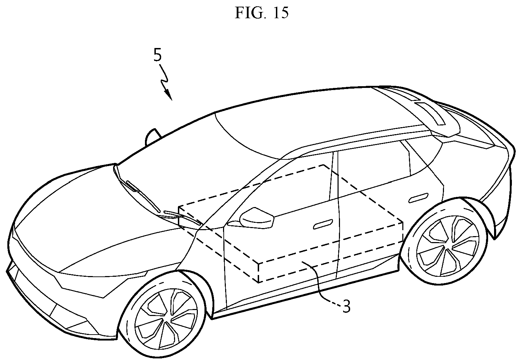

FIG. 15 is a diagram illustrating a vehicle 5 including the battery pack 3 in FIG. 14.

Referring to FIG. 15, a vehicle 5 according to an embodiment of the present disclosure may be, for example, an electric vehicle, a hybrid vehicle, or a plug-in hybrid vehicle, and include the battery pack 3 according to an embodiment of the present disclosure. The vehicle 5 includes a four-wheeled vehicle and a two-wheeled vehicle. The vehicle 5 operates by receiving power from the battery pack 3 according to an embodiment of the present disclosure.

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

### [Description of Reference numerals]

5: Vehicle
3: Battery pack
2: Pack housing
1: Battery cell
10: Electrode assembly
11: First non-coated portion
12: Second non-coated portion
H1: Winding hole
20: Battery housing
21: Beading portion
22: Crimping portion
30: Collector
H2: Collector hole
31: Support portion
32: Tap coupling portion
33: Housing coupling portion
33a: Contact portion
33b: Connection portion
N: Indentation
F: Bent portion
S1: First state
S2: Second state
S3: Third state
40: Housing cover
41: Venting portion
G1: Sealing gasket

## Claims

1. A battery cell comprising:
an electrode assembly in which a first electrode and a second electrode are wound around a winding axis while a separator is interposed therebetween, thereby defining a core and an outer circumferential surface, the first electrode comprising a first non-coated portion that is not coated with an active material layer along the winding direction;
a battery housing having an opening provided on one side thereof and configured to accommodate the electrode assembly through the opening; and
a collector comprising a support portion disposed on an upper portion of the electrode assembly, a tap coupling portion extending from the support portion and coupled to the first non-coated portion, and a housing coupling portion extending from the support portion to be electrically coupled to the inner surface of the battery housing and configured capable of being elongated in its length.

2. The battery cell according to claim 1,
wherein the boundary between the support portion and the housing coupling portion is bent such that an end of the housing coupling portion faces the opening and the inner surface of the battery housing.

3. The battery cell according to claim 1,
wherein the housing coupling portion extends in the winding axis direction of the electrode assembly and in the radial direction thereof.

4. The battery cell according to claim 1,
wherein the housing coupling portion comprises:
a contact portion coupled to the inner surface of the battery housing; and
a connection portion connecting the support portion and the contact portion.

5. The battery cell according to claim 1,
wherein the housing coupling portion is
configured to be compressible in its length.

6. The battery cell according to claim 1,
wherein at least a portion of the housing coupling portion has
a rim shape with an empty center.

7. The battery cell according to claim 1,
wherein at least a portion of the housing coupling portion has
a planar shape of an oval.

8. The battery cell according to claim 1,
wherein at least a portion of the housing coupling portion has
a planar shape of a polygon.

9. The battery cell according to claim 4,
wherein the outer edge of the connection portion has at least one indentation provided to be recessed to the inside of the connection portion.

10. The battery cell according to claim 4,
wherein the connection portion has
at least one bent portion.

11. The battery cell according to claim 10,
wherein the bent portion has
a convex shape in a direction toward the opening.

12. The battery cell according to claim 4,
wherein the contact portion has
a continuous shape along the inner surface of the battery housing.

13. A battery pack comprising at least one battery cell according to any one of claims 1 to 12.

14. A vehicle comprising at least one battery pack according to claim 13.
